# EUROPEAN PATENT APPLICATION

(11) **EP 1 224 994 A2**
(43) Date of publication of application: **24.07.2002**
(21) Application number: 02008638.5
(22) Date of filing: 31.10.1997
(51) Int. Cl.: B23C 5/10, B23C 5/28

(54) **Milling cutter**

(30) Priority: 03.12.1996 SE 9604445
(62) Divisional of application: 97911568.0
(71) Applicant: SECO TOOLS AB, S-737 82 Fagersta (SE)
(72) Inventor: Strand, Bengt, 737 32 Fagersta (SE); Berglöw, Karl-Erik, 737 33 Fagersta (SE)
(74) Representative: Taquist, Lennart

(57) **Abstract**

The present invention relates to a cutting head (10) for chip removing machining comprising a first portion (14) for anchoring to a shank. The cutting head is provided with three cutting edges, which are integral with the cutting head. A central channel (34) extends in the cutting head towards a first free end (13) of the cutting head. The cutting head has three chip flutes. Each cutting edge is fed with flush medium via a hole (33), thereby providing three holes (33) terminating at the first free end (13) of the cutting head. The holes (33) intersect the central channel (34). One cutting edge (30) connects substantially to the axis of rotation (CL) of the cutting head.

## Description

### Background of the invention

The present invention relates to a cutting head for rotary chip removal machining the preamble of the independent claim 1.

### Prior art

It is previously known through applicants US-A-4,850,759 to provide a solution to the problem of providing milling and drilling tools in small dimensions with interchangeable cutting edges. However in some cases at high rotational speeds, the known tool tends to vibrate and create unwanted patterns or vibrational marks in the work piece. This in combination with that the tool sometimes also gets over-heated has been problematic for the user.

### Objects of the invention

One object of the present invention is to provide a tool, which stays rigid also at high rotational speeds.

Another object of the present invention is to provide a tool, which has good cooling.

Still another object of the present invention is to provide a cutting head, which enables good stability and good cooling.

These and other objects of the present invention are realized by a tool and a cutting head of the above-mentioned type, which have obtained the characteristics indicated in claim 1.

### Short description of the drawings

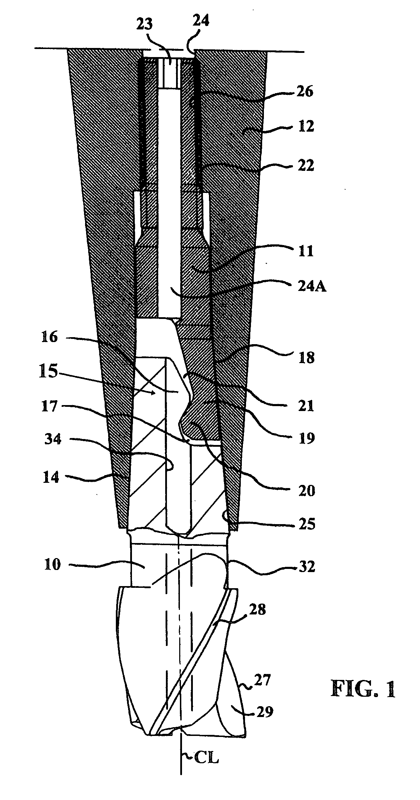

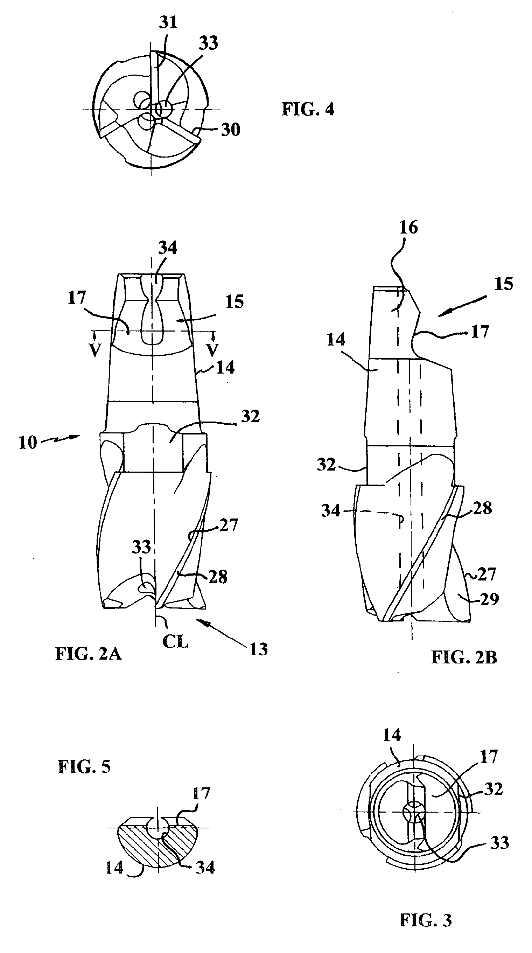

Below an embodiment of the present invention will be described with reference to the enclosed drawings, wherein Fig. 1 shows a tool according to the present invention in an assembled condition, partly in cross-section; Figs. 2A and 2B show side views of a cutting head according to the present invention, more in detail; Fig. 3 shows a bottom view of a cutting head according to the present invention; Fig. 4 shows a top view of a cutting head according to the present invention; Fig. 5 shows a cross section according to the line V-V in Fig. 2A.

### Detailed description of the invention

The embodiment of a tool according to the present invention shown in Fig. 1 comprises a cutting head 10, a locking screw 11 as well as a shank 12. The tool comprises an axial channel, which extends beyond hook-shaped means 15, 19 on the cutting head and the locking screw, respectively. The channel runs through the hook-shaped means 15 of the cutting head, but preferably does not extend through the hook-shaped means 19 of the locking screw. The channel function is partly to transfer flush medium and partly to diminish the masses of the means. The channel breaks through border surfaces of the hook-shaped means 15 of the cutting head and the channel occupies, in the area of the hook-shaped means, a bigger space in the cutting head than in the locking screw. In this manner the center of gravity in the area of the hook-shaped means, is displaced closer to the axis CL of rotation of the tool, and therefore the tool becomes dynamically centered. The asymmetrical means 15 of the material with highest density comprises a mass diminishing recess 34.

The cutting head 10 is provided with at least one cutting edge at the end 13 facing away from the shank 12, which is given different design depending on the area of application. A preferred shape of the forward end of the cutting head 10 is shown in detail in Figs. 2A - 5. The cutting head 10 is performed in hard material, preferably cemented carbide and comprises three screw-shaped first cutting edges or major cutting edges 27. The number of major cutting edges may alternatively be one, two or four to six. Each major cutting edge 27 is formed along the intersection line of a clearance surface or protruding land 28 and a chip surface or chip flute 29. The major cutting edges 27 lie in a common, imaginary cylinder, which is concentric with the axis CL of rotation of the cutting head and of the tool. Each chip flute 29 is concavely formed and extends from a connected second cutting edge or minor cutting edge 30 in direction axially inwardly from a bevel or a free end 13 of the cutting head. The minor cutting edge 30 is formed at the intersection of the chip flute 29 and an end surface 31 and essentially has a radial extension inwards from the imaginary cylinder, whereof a minor cutting edge substantially connects to the axis of rotation CL of the cutting head such that the tool can be able to drill downwards into the work piece during milling. Each pair of major and minor cutting edges is fed with flush medium via a hole 33. The three holes 33 are arranged suitably symmetrical about the axis of rotation of the cutting head. The holes connect to a central channel 34, which terminates in the area of the other free end of the cutting head.

At the end facing towards the shank 12 the cutting head is provided with a first conical portion 14, which is provided with a first means for engagement 15, which in the shown embodiment comprises a first lip 16 as well as a first recess 17. The intermediate portion of the cutting head 10 is provided with a key grip 32, the application of which is explained below.

The locking screw 11, which preferably is performed in steel, has a second conical portion 18 at the end facing towards the cutting head, which is provided with a second means for engagement 19, which is intended to cooperate with the first the means for engagement 15. Such as shown in Fig. 1 the provision of the second means for engagement 19 implies that a substantial part of the second conical portion 18 has been removed. The second means for engagement 19 comprises a second lip 20 as well as a second recess 21. In active position the first lip 16 cooperates with the second recess 21 and the second lip 20 with the first recess 17. The second lip 20 is preferably intact, that is, no recess for flush medium is made in this lip, and therefore the mass in the second means for engagement 19 is relatively alike as that of the first means for engagement 15 such that wobbling is substantially avoided.

Axially inside the second means for engagement 19, in the axial direction, the locking screw 11 has an externally threaded, preferably cylindrical portion 22. An Allen key grip 23 is provided at the axially innermost end of the locking screw 11, whereby loosening or tightening of the locking screw 11 is made possible through the internal channel 24 of the shank 12. Normally however, tightening or loosening of the locking screw is accomplished through the external key grip 32. Alternatively the thread 26 may be arranged at an end of a releaseable sleeve, the other end of which then is provided with an external thread as well as a key grip.

The shank 12 is provided with a conical seat 25 at the end facing towards the cutting head 10, which receives the first and second conical portions 14 and 18 of the cutting head 10 and the locking screw 11, respectively. Inside the conical seat 25 the shank 12 has a substantially cylindrical, internally threaded portion 26, which cooperates with the external threaded portion 22 of the locking screw 11. The portion 26 is situated axially outside of the above-mentioned channel 24.

Mounting and dismounting of the tool is more closely described in US-A-4,850,759. Cooperation between the external thread 22 and the internal thread 26 entails that the locking screw 11 and thereby also the cutting head 10 are displaced axially into the shank 12 until the cone-shaped portion 14 comes into abutment against the conical seat 25, i.e. the position according to Fig. 1 has been achieved. The cutting head 10 is now anchored in the shank 12 in a satisfactorily manner. Thereby a through the tool going channel for flush medium has been formed via the recesses 24, 24A, 34 and 33.

The threads 22 and 26 are performed as right-hand threads at tools for right-hand cutting and as left-hand threads at tools for left-hand cutting.

For the above-described embodiment the cone angle for the cutting head and seat should be less than 25°. In addition shall be pointed out that the described embodiment relates to milling cutters, i.e. tools which rotate about their longitudinal center axes. Milling cutters with small cutting portions are expected to be the first area of application for the present invention but also drilling tools fall within the scope of the invention.

The invention is in no way limited to the above-described embodiments but may be freely varied within the limits of the subsequent claims.

## Claims

1. Cutting head for chip removing machining comprising a first portion (14) for anchoring to a shank, said cutting head being provided with three cutting edges (30), which are integral with the cutting head, a central channel (34) extending in the cutting head towards a first free end (13) of the cutting head, said cutting head having three chip flutes (29),
**characterized in that** each cutting edge (30) is fed with flush medium via a hole (33), thereby providing three holes (33) terminating at the first free end (13) of the cutting head and **in that** the holes (33) intersect the central channel (34) and **in that** one cutting edge (30) connects substantially to the axis of rotation (CL) of the cutting head.

2. Cutting head according to claim 1,
**characterized in that** the three holes (33) are arranged suitably symmetrically about the axis of rotation (CL) of the cutting head.

3. Cutting head according to anyone of claims 1 or 2,
**characterized in that** the central channel (34) terminates in the area of a second free end of the cutting head.

4. Cutting head according to anyone of claims 1 to 3,
**characterized in that** each chip flute (29) is concavely formed and extends from a connected cutting edge (30) in direction axially inwardly from the free end (13) of the cutting head.

5. Cutting head according to anyone of claims 1 to 4,
**characterized in that** the cutting edge (30) is formed at the intersection of the chip flute (29) and an end surface (31) and essentially has a radial extension inwardly from the periphery of the cutting head.

6. Cutting head according to anyone of claims 1 to 5,
**characterized in that** the cutting head (10) is performed in hard material, preferably cemented carbide.
